# EUROPEAN PATENT APPLICATION

(11) **EP 1 974 803 A1**
(43) Date of publication of application: **01.10.2008**
(21) Application number: 08251058.7
(22) Date of filing: 26.03.2008
(51) Int. Cl.: B01F 5/02, B01F 5/10, B01F 15/00

(54) **Tank mixing apparatus**

(30) Priority: 27.03.2007 GB 0705838
(71) Applicant: System Mix Limited, Cambridgeshire PE28 5SB (GB)
(72) Inventor: Harvey, Barry Peter, Peterborough Cambridgeshire PE7 3RF (GB)
(74) Representative: Lamb, Richard Andrew

(57) **Abstract**

A tank mixing apparatus (1) for a mixing tank (20) comprises a tank mixer (3) for mixing the contents of the tank (20), a support extension (9), and a support member (11). The tank mixer (3) is adapted to extend within a mixing tank (20). The support extension (9) extends from the tank mixer (3), and is securable to an inner surface of the mixing tank (20). The support member (11) is adapted to removably mate with the support extension (9), to locate and support the tank mixer (3). The tank mixing apparatus thereby enables longer drop down nozzle assemblies to be used by providing lateral and/or vertical support to oppose the thrust forces generated by the nozzle (5) and/or the weight of the tank mixer respectively.

## Description

The present invention relates to a tank mixing apparatus, and in particular to a drop down tank mixer having a support extension and a support member to provide lateral support.

Mixing systems, for mixing liquids within a container, require means for mixing or agitating the liquid. Large scale mixing systems, for example digesters used within the waste water industry, re-circulate and pump liquid into the container through high velocity nozzles, to promote mixing.

In such waste water digester systems, the mixing system is used to prevent solids suspended within the liquid from settling and depositing on the base of the digester tank. Traditionally, the nozzles of such arrangements are bolted to the base of the digester tank. However, should any mechanical failure of the nozzles occur, the tank must be emptied to provide maintenance access to the nozzles, at significant cost. For example, the cost of emptying and cleaning a 3000m³ digester tank can be in the region of £100,000 or more.

Therefore, tank mixing arrangements have been developed which can be suspended from the ceiling of a tank, thereby enabling the tank mixer to be withdrawn from the mixing tank via the roof, should they require maintenance. The tank mixing arrangements typically comprise a nozzle assembly including a length of pipe suspended from the roof of a mixing tank, and at least one nozzle located at the lower end of the pipe, the pipe supplying and supporting the nozzle.

However, it has been found that for deeper tanks, where longer lengths of pipe are required to position the nozzle at the appropriate depth within the tank, the bending moment experienced by the pipe in use due to nozzle thrust, and interaction with the mixing liquid within the tank, is greatly increased due to the increase in length of the pipe. As a result, drop down nozzle assemblies are not suitable for tanks greater than a certain depth. Typically, drop down nozzle assemblies cannot be used in tanks over 14 metres deep.

In addition, while nozzle assemblies of increased length may be supported from tanks having concrete roofs, it has been found that drop down nozzle assemblies over a certain length cannot be used with tanks having roofs with a lower degree of structural support, due to the increased weight. For example, it has been found that tanks having metallic roofs are not able to adequately support the longer nozzles assemblies.

Examples of mixing tanks including fixed tank mixers are described in US Patent Number 5,744,105, and Austrian Patent Number 392055. German Patent Number 4335137 and Japanese Patent Number 2000167375 describe alternative arrangements in which mixing blades are fixed to guide rails within the tank, neither of which are removable for maintenance or repair. German Patent Number 19826098 describes a tank mixing mechanism which is not connected to the tank at all, and instead rests in the tank on its base. A further alternative tank mixer is described in Japanese Patent Number 2002191955 in which the drive shaft for a pair of mixing blades is supported within a tank by a contactless magnetic support.

It is therefore desirable to provide an improved tank mixing apparatus, which provides support for a drop down tank mixer, addresses the above-described problems, and/or which offers improvements generally.

In an embodiment of an aspect of the invention, there is provided a tank mixing apparatus for a mixing tank comprising a tank mixer for mixing the contents of the tank, a support extension, and a support member. The tank mixer is adapted to extend within a mixing tank. The support extension extends from the tank mixer. The support member is securable to an inner surface of the mixing tank, and the support member is adapted to removably mate with and engage the support extension, to locate and support the tank mixer. The support member preferably removably mates with the support extension to laterally support the tank mixer to oppose thrust forces. In addition, or alternatively, support member may removably mate with the support extension to support the weight of the tank mixer. The tank mixing apparatus thereby enables longer drop down nozzle assemblies to be used by providing lateral support to oppose the thrust forces generated by the nozzle(s). In addition, or alternatively, by supporting the weight of the nozzle assembly, longer nozzle assemblies can be used in mixing tanks having roofs with lower structural support.

The support extension may be an elongate member.

One of the support member and the support extension may comprise a male portion, and the other a female portion. The support member and support extension removably mate by engagement of the male and female portions. The male portion comprises a distal end and the female portion comprises an entrance mouth for receiving the distal end of the male portion. The width of the distal end of the male portion is significantly narrower than the width of the entrance mouth of the female portion. In this way, a large tolerance is provided between the support extension and the support member at point the male portion is received by the female portion, to allow for misalignment between the support extension and the support member as the tank mixer is lowered into the mixing tank.

The support member and the support extension may also each comprise an engagement portion, the engagement portions engaging to support the mixing means when the support member mates with the support extension. The tolerance between the engagement portions is significantly less than the tolerance between the distal end and the mouth. Hence, the larger tolerance between the entrance mouth and the distal end allows for alignment of the support member and support extension, while the closer tolerance between the engagement portions restricts lateral movement of the support extension and hence the tank mixer.

The support member comprises attachment means for attachment to the base of a mixing tank. Alternatively, the support member may be integral with the base of the mixing tank.

The support extension may be integral with the tank mixer. For example, the support member may be formed as part of, and extending from the nozzle section.

One of the support member and the support extension comprises a tapered guide For guiding the first and second engagement portions together.

In another embodiment, the female portion comprises a frusto-conical cup for receiving the male portion. The cup includes an upper rim defining the entrance mouth, and a lower rim defining the engagement portion. The female portion may also include a frame for supporting the cup section. Where the support member includes the female portion, the support frame may also be used for attachment of the support member to the base. In addition, the support member may comprise a base plate for attachment to the tank base, and for supporting the support member vertically.

In an alternative embodiment, the male portion comprises a plurality of fins. The plurality of fins may define a conical structure having a distal end and a base, the base defining the engagement portion, The base of the conical structure comprises a vertical wall defining the engagement portion. The female portion may comprise a hollow box section.

In a yet further embodiment, the mixing tank may comprise a base, the support extension engaging with the support member or the base of the mixing tank to support the weight of the tank mixer.

In another embodiment, the mixing tank may comprise a roof, the tank mixer being adapted to extend within the mixing tank from the roof. The tank mixer may also comprise at least one nozzle, and a supply pipe for extending between the nozzle and the roof of the mixing tank. The tank mixer may be connected to the roof of the tank by the supply pipe.

The present invention will now be described by way of example only with reference to the following illustrative figures in which:
Figure 1 is a schematic cross section of a mixing tank according to an embodiment of the present invention;
Figure 2 shows a tank mixer and support arrangement of Figure 1;
Figure 3 is an enlarged view of the support member of Figure 2;
Figure 4 is a tank mixer and support arrangement according to another embodiment of the invention;
Figure 5(a) shows the support member of Figure 4 in contact with tapered surface of the support member of Figure 4;
Figure 5(b) shows the support member of Figure 4 in aligned with the locating section of the support member of Figure 4; and
Figure 5(c) shows the support member of Figure 4 in engaged with the locating section of the support member of Figure 4.

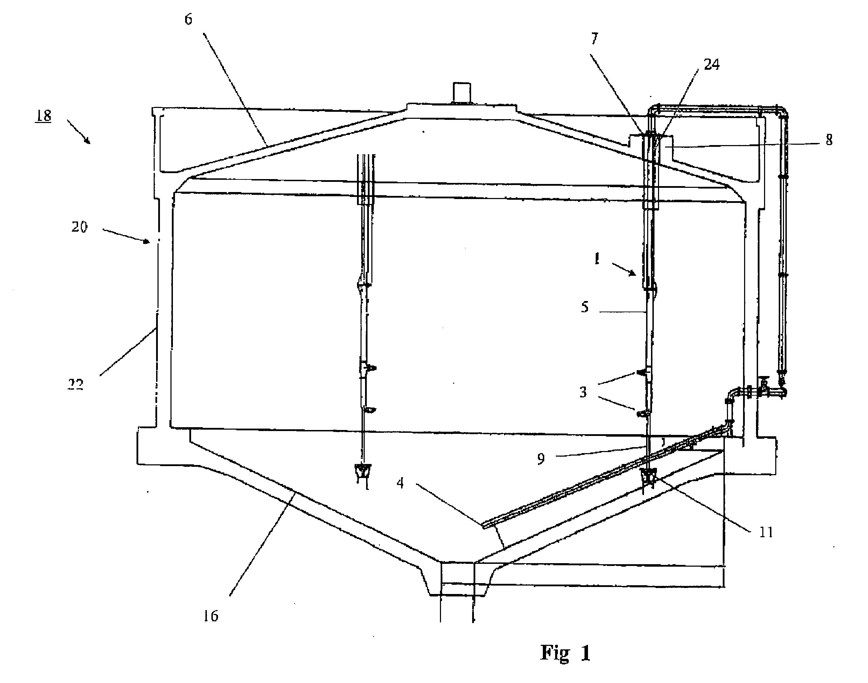

Referring to Figure 1, a digester 18 comprises a mixing tank 20, and a pair of tank mixers 1, although any suitable number of tank mixers may be used depending on the flow pattern required. The mixing tank 20 comprises a tank wall 22, floor 16 and roof 6. The tank 20 is typically formed from concrete, and is a unitary construction. Alternatively, the tank 20 may be formed from other materials such as metal, or reinforced fibre glass.

Each tank mixer 1 comprises a nozzle section 3 including a pair of nozzles 26 and 27, a supply pipe 5, and a roof attachment 7. The twin nozzle system may be of the type produced by Rotamix^{®}, although it should be appreciated that the present invention is applicable to any suspended nozzle system. The upper nozzle 26 and lower nozzle 27 of the nozzle section 3 are oriented in different directions, to create dual mixing zones, which increases the efficacy of the mixing system in preventing sedimentation of solid suspension. The waste water is drawn from the tank 20 into the inlet pipe 4, and pumped at pressure to the nozzles 3 by a pump (not shown) such as a Vaughan chopper pump, via the supply pipe 5. The waste water is pumped to the nozzles 3 at a pre-determined pressure calculated to raise non-organic solids such as grit into suspension. The pressure is variable depending on specific mixing requirements of the tank 20. In Figure 1 the supply to the second tank mixer has been omitted.

The tank mixer 1 is attached to the roof 6 of the tank 20 at the attachment point 8 by roof attachment means 7. The roof attachment point 8 comprises an aperture 24 formed in the roof 6 adapted to receive the tank mixer 1. The attachment means 7 comprises means for rigidly and releaseably attaching to the attachment point 8, as well as sealing means for sealing the aperture 24 from the atmosphere. To remove the tank mixer 1 from the tank 20 for maintenance, the attachment means 7 is disconnected from the attachment point 8, and the tank mixer 1 lifted out through the aperture 24.

To create a specific mixing characteristic, the nozzles 3 must be situated at specific points within the tank 20. In use, the tank mixer experiences a bending moment due to the thrust generated by the high pressure nozzles 3. The magnitude of the bending moment is dependant on the magnitude of the thrust, and the distance of the nozzles 3 from the attachment point 8, which is effectively the length of the supply pipe 5. Therefore, as the size of the tank 20, and hence the length of supply pipe 5 required, is increased, the bending moment experienced by the tank mixer 1 increases for a constant thrust. Once the supply pipe 5 exceeds a specific length, it is no longer able to withstand the bending moment generated by the lateral thrust forces, without risking mechanical failure.

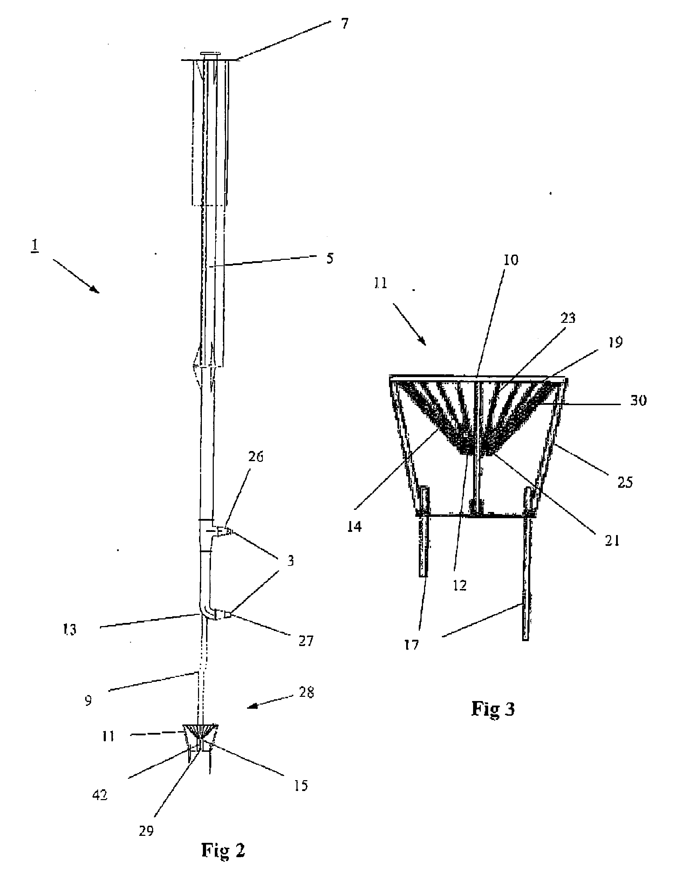

A support mechanism 28 (Figure 2) is provided to restrict lateral movement of the nozzles 3, and oppose the bending moment exerted on the tank mixer 1 by the thrust forces of the nozzles. As shown in Figure 2, the support mechanism 28 comprises a support extension 9, and a support member 11. The support extension 9 is an elongate member connected to and extending from the distal end of the tank mixer 1. The support extension 9 may be integral with the tank mixer 1, or connected by an attachment means to part of the tank mixer 1. Preferably, the extension member extends from the lowest point of the nozzle 3. The support extension 9 comprises a first connection end 13 for connecting to the tank mixer 1, and an opposing end 15, which defines a male portion having a distal end 29, The support member 11 locates and engages with the support extension 9 to restrict lateral movement of the support extension 9, and hence the tank mixer 1.

The support member 11 shown in Figures 2 and 3 comprises a female portion 44 defined by a frusto-conical cup 30, support frame 25, and attachment means 17. The cup 30 includes an upper rim 19 which defines a mouth 10 for receiving the male portion 15 of the support extension 9, and an lower rim 21 defining an engagement portion 12 for locating and engaging the engagement portion 42 of the support extension 9. The cup 30 is supported by the frame 25. The attachment means include attachment rods 17 of varying length to orient the support member 11 horizontally while supported on the sloping floor 16 of the tank 20. Alternatively, the frame 25 may bolt directly to a flat tank floor.

The frusta-conical configuration of the cup 30 is defined by the tapered surface 14, decreasing in diameter from the mouth 10 to the engagement portion 12. The tapered surface 14 interconnects the mouth 10 and the engagement portion 12 and defines a guide between the two. The tapered surface 14 is formed from multiple struts or guide members 23, but may alternatively include a solid tapered guide surface.

In use, the tank mixer 1 is lowered into the tank 20 through the roof aperture 24. As the tank mixer 1 approaches the base of the tank 20, the distal end 29 of male portion 15 of the support extension 9 is received by the mouth 10 of the support member 11. The width of the distal end 29 is selected to provide a large tolerance with the width of the mouth 10, to allow for misalignment between the support extension 9 and the support member 11. As the support extension 9 is lowered further into the support member 11, if it is not accurately aligned with the engagement portion 12, it will contact the tapered surface 14. The tapered surface guide 14 guides the support extension 9 downwards towards the engagement portion 12. The multiple guide members 23 enable efficient displacement of fluid within the support member 11 as the support extension 9 is received.

The support extension 9 is circular in cross-section, such that the gap between the support section 9 and the support member 11 is equidistant about the support extension 9. Alternatively, the support extension 9 may have a square cross-section or be of any suitable shape. The width of the engagement portion 12 is selected such that there is a close tolerance with the width of the engagement portion 42 of the support extension 9, which is defined by the side wall of the support extension 9.

In this way, when the engagement portion 42 of the support extension 9 is received by the engagement portion 12, lateral movement of the support extension 9, and hence the tank mixer 1, is limited. The bending moments experienced by the tank mixer 1 due to the thrust forces are balanced through engagement of the engagement portion 42 of the support extension 9 with the lower rim 21 which defines the engagement portion 12. The engagement portion 12 allows the support extension 9 to extend downwards past the lower rim 21 to contact the base plate 32 of the frame 25.

Alternatively, the support extension 9 may contact the tank floor 16. This enables the support extension 9 to support the weight of the tank mixer 1, as well as provide support for the thrust forces, which is particularly applicable to mixing tanks having roof structures unable to support the weight of the tank mixer 1. The roof attachment means 7 may comprise a split structure which enables the weight of the tank mixer 1 to be supported by the support extension 9, with the roof attachment 7 means connecting to the roof structure to seal the entry aperture 24 from the atmosphere. Specifically, a first seal is provided between at least a portion of a section the attachment means 7 and the roof structure, and a second seal is provided between at least a portion of a section of the attachment means and the supply pipe 5.

The frusto-conical cup arrangement allows a relatively narrow support extension to be used. This is advantageous when the diameter of the roof aperture or entry point 24 is limited. Typically, the frusto-coniral cup arrangement is used in combination with mixing tanks 20 having a roof entry aperture 24 of 900mm or less. However, it will be appreciated that this arrangement is not limited to mixing tanks 20 having an entry aperture 24 of 900mm or less.

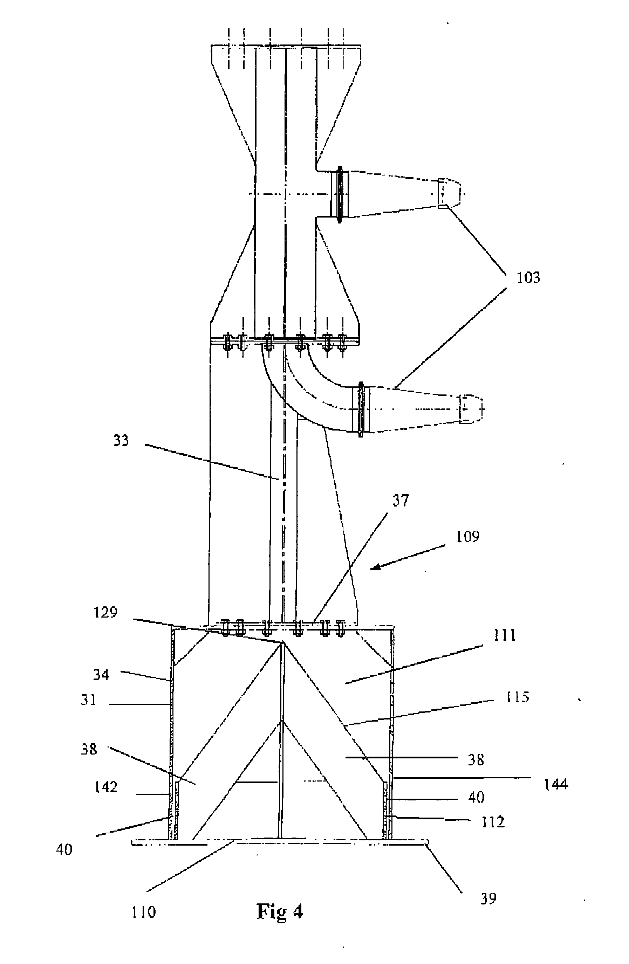

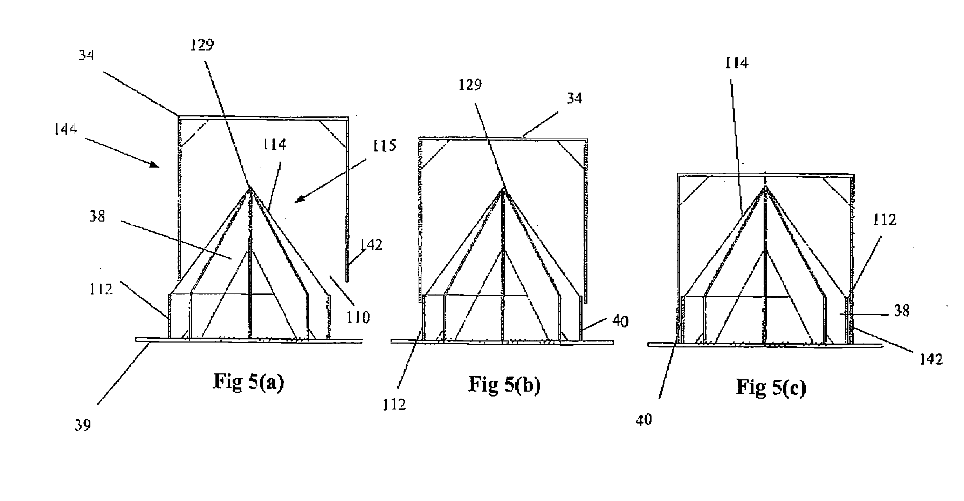

In the embodiment shown in Figures 4 and 5(a)-(c), the support extension 109 comprises a female portion 144 defined by an elongate hollow member 34 having a mouth 110. Like numerals increased by 100 are used to define structures similar to those of Figures 1 to 3. In the embodiment shown in Figures 4 and 5(a)-(c), the female portion 144 of the support extension 109 comprises a tubular box section 34, although it will become evident that other suitable hollow structures, such as square or rectangular box sections may be used. The box section 34 is supported at the end of an extension member 33, which connects the box section 34 to the tank mixer 101. The extension member 33 includes a base flange 37 for bolting or otherwise connecting to the box section 34. The box section 34 comprises a side wall 35 and an upper end wall 31, the side wall 35 defining a mouth 110 in the base of the box section 34, and the inner wall of the box section 34 defining an engagement portion 142.

The support member 111 comprises a male portion 115 defined by multiple fins 38. The fins 38 each having a tapered outer edge 114, which combine to define a substantially conical structure. The fins 38 are shown in Figures 4 and 5 (a)-(c) as extending to form an apex which defines the distal end 50 of the male portion 48. Alternatively the fins 38 may have flattened tips such that they define a frusto-conical structure, the tips of the fins 38 defining the distal end 129. Alternatively, the support member 111 may comprise a solid conical structure.

At their base, the fins 38 include a vertical base wall 40. The apex of the cone defined by the fins 38, defines the distal and 129 of the support member 109, and engagement portion 112 of the support member 111 is defined by the vertical base walls 40. The base of the fins 38 are preferably arranged to define a circular base. The tapered surface 114 of the fins 38 define a guide.

In use, the support extension 109 is lowered towards the support member 111, and the mouth 110 receives the distal end 129 of the support member 111. As shown in Figure 5(a), the box section 34 of the support extension 109 contacts the guide 114 of the support member 111 which interconnects the distal end 129 and the engagement portion 112. The guide 114 guides the engagement portion 142 towards the engagement portion 112.

When the box section 34 reaches the base of the guide 114, as shown in Figure 5(b), the engagement portion 142 defined by the side wall 31 slides over the engagement portion 112 defined by the vertical base wall 40. Eventually, the bottom edge of the side wall 31 contacts the base plate 39, or the floor of the tank 20, as shown in Figure 5(c).

The width of the distal end 129, defined by the width of the peak of the conical structure defined by the fins 38, is selected to provide a large tolerance with the width of the mouth 110 of the support section 109. The width of the engagement portion 112, as defined by the width of the base of the fins 38, is selected such that there is a close tolerance with the width of the mouth 110 of the support extension 109, and hence a close tolerance between the engagement portions.

The engagement portions 112 and 142 engage to locate the support extension 109 and oppose lateral movement of the support extension 109. In addition, the contact between the box section 34 and the base plate 39 allows the support extension 109 to support the weight of the tank mixer 1.

It will be appreciated that in further embodiments various modifications to the specific arrangements described above and shown in the drawings may be made. For example, whilst two embodiments are described which the support extension is an male elongate tubular member having a flat distal end in combination with a female cup section, and female box section in combination with a male conical section, any suitable arrangement of male and female portions may be used. For example, the support extension may comprise an male elongate tubular member having a tapered distal end, which is received by a support member comprising a straight sided female box section. Furthermore, while it is described that the box section 34 of the second embodiment is connected to the tank mixer 1 by an extension member 33, the box section may extend directly from the tank mixer 1, or be connected by some other means. Furthermore, it should be appreciated that the support extensions 9 and 109 may engage with, and be laterally supported by, the support members 11 and 111, without engaging with a base plate or tank floor to support the weight of the tank mixer 1.

## Claims

1. A tank mixing apparatus (1) for a mixing tank (20) comprising:
a tank mixer (3) for mixing the contents of the mixing tank (20), adapted to extend within a mixing tank (20) ;
a support extension (9) connected to and extending from the tank mixer (3); and
a support member (11) securable to an inner surface (16) of the mixing tank (20);
**characterised in that** the support member (11) is adapted to removably mate with and engage the support extension (9) to locate and at least partially support the tank mixer (3) within the tank (20).

2. The tank mixing apparatus (1) of claim 1, wherein the support member (11) mates with and engages the support extension (9) to laterally support the tank mixer (3).

3. The tank mixing apparatus (1) of claim 1 or 2, wherein one of the support member (11) and the support extension (9) comprises a male portion (15) and the other comprises a female portion (44), the support member (11) and support extension (9) removably mating by engagement of the male and female portions.

4. The tank mixing apparatus (1) of claim 3, wherein the female portion (44) comprises an entrance mouth (10) for receiving a distal end (29) of the male portion (15), the width of the distal end (29) being narrower than the width of the entrance mouth (10).

5. The tank mixing apparatus (1) of claim 4, wherein the support member (11) and the support extension (9) each comprise an engagement portion (12), (42), which are engageable to support the tank mixer (3) when the support member (11) mates with the support extension (9).

6. The tank mixing apparatus (1) of claim 5, wherein the tolerance between the engagement portions (12),(42) is less than the tolerance between the distal end (29) of the male portion (15) and the mouth (10) of the female portion (44).

7. The tank mixing apparatus (1) of claim 5 or 6, wherein one of the support member (11) and the support extension (9) comprise a guide for guiding the first and second engagement portions (12),(42) together.

8. The tank mixing apparatus (1) of claim 7, wherein the guide comprises a tapered surface Interconnecting the mouth (10) and the engagement portion (42) of the female portion.

9. The tank mixing apparatus (1) of claim 7, wherein the guide comprises a conical surface interconnecting the distal end (129) and the engagement portion (112) of the male portion (115).

10. The tank mixing apparatus of any one of claims 5 to 8, wherein the female portion (44) comprises a frusto-conical cup (30) for receiving the male portion (15) having an upper rim (19) defining the mouth (10), and a lower rim (19) defining the engagement portion (12).

11. The tank mixing apparatus (I) of any one of claims 5 to 7, wherein the male portion (110) comprises a plurality of fins (38) defining a conical structure having an apex and a base, the engagement portion (112) being located proximate the base.

12. The tank mixing apparatus (1) of any one of claim 11, wherein the female portion (144) comprises a hollow box section.
